# EUROPEAN PATENT APPLICATION

(11) **EP 2 128 024 A1**
(43) Date of publication of application: **02.12.2009**
(21) Application number: 08157275.2
(22) Date of filing: 30.05.2008
(51) Int. Cl.: B64D 15/16

(54) **An arrangement for a de-icer**

(71) Applicant: SAAB AB, 581 88 Linköping (SE)
(72) Inventor: Johansson, Rikard, S-589 37, LINKÖPING (SE); Lundgren, Jonas, S-587 39, LINKÖPING (SE)
(74) Representative: Norberg, Charlotte

(57) **Abstract**

The invention relates to an arrangement for a de-icer, comprising an inductor assembly (6), a control unit (8) for controlling the inductor assembly (6), an energy supply unit (22) for providing the inductor assembly (6) with electrical power, and cables connecting the inductor assembly (6) to the control unit (8) and the energy supply unit (22). One single energy supply cable (24) connects at least two inductor assemblies (6) to the energy supply unit (22).

## Description

This invention relates to an arrangement for a de-icer according to the preamble of claim 1

Ice on structural members of aircrafts in flight is a danger that is well known. The structural member may be an aircraft surface susceptible to icing during flight, including the leading edges of wings, stabilizers, engine inlets, rotors, horizontal tails etc. Attempts have been made to removing ice from aircraft during flight. A method that has been extensively investigated is so called mechanical de-icing. In mechanical de-icing the leading edges of structural members are distorted in so manner so as to crack ice that has accumulated thereon. One mechanical de-icing technique utilizes internal inductors to "hammer" and thereby distort the leading edges of the structural member. The inductor is connected to a power source and when a high-current pulse is lead through the inductor heavy vibrations are created by a magnetic field in the inductor. The vibrations cause a hammering effect on the structure which removes the ice. Also, in known arrangements hot air is ducted through the leading edge to realize anti-icing functionality.

Document US-A-5429327 discloses an electro-impulse de-icer for de-icing an aircraft structural member. The de-icer includes an inductor coil, which is disposed within an opening immediate to the leading edge. The de-icer further includes a movable metal target disposed in proximity with the coil. The target is supported by a flexible, ice-accumulating support member that permits the target to move relative to the coil and to the structural member. The support member is rapidly, and forcefully, displaced away from the coil and the structural member upon passing a short-duration, high duration pulse through the coil. The current flow creates an electromagnetic field that induces eddy currents in the target and the support member. Upon collapse of the electromagnetic field in the coil, the target and support member are pulled rapidly to their rest position.

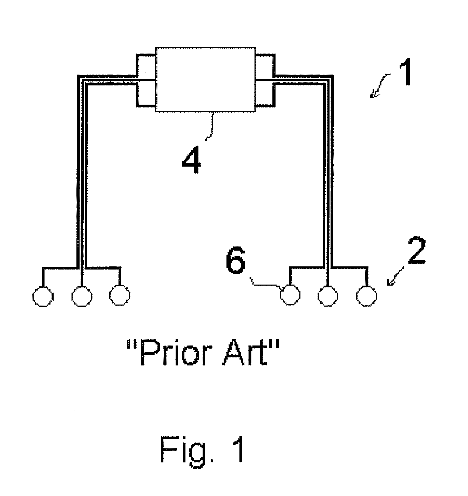

Another prior art arrangement for a de-icer is disclosed in figure 1 of the present application. The arrangement comprises a combined control unit and energy supply unit. The arrangement also comprises inductors assemblies, which are individually connected to the combined control unit and energy supply unit. Since the inductor assemblies operate with high electrical current the cables have to be heavy and coarse. These results in a large total weigh of the arrangement and in difficulties when installing the arrangement in a structure, as for example a wing in an aircraft. When the inductors are installed in the leading edge of a wing provided with movable slats the coarse cables may cause installation problems.

The objective problem to be solved by the present invention is to reduce the weight of an arrangement for a de-icer

Another objective problem to be solved by the present invention is to simplify the installation of an arrangement for a de-icer.

A further objective problem to be solved by the present invention is to increase the reliably of an arrangement for a de-icer.

This is achieved by an arrangement for a de-icer according to claim 1.

Since the amount of heavy energy supply cables are reduced the weight of the arrangement will be reduced. Also, since the amount of energy supply cables to the inductors is reduced it will be easier to install the cables in a structure, such as a wing for an aircraft.

According to a preferred embodiment the energy supply unit and the control unit are separated. As a result, the arrangement will be more flexible to install in a vehicle, such as an aircraft, since the energy supply unit may be installed in a suitable place in the aircraft.

Other advantages and features of the invention can be derived from the following detailed description of exemplary embodiments of the invention, with reference to the drawings.
fig. 1 is a view of a prior art arrangement for a de-icer,
fig. 2 is a view of a first embodiment of an arrangement for a de-icer according to the invention,
fig. 3 is a view of a second embodiment of an arrangement for a de-icer according to the invention,
fig. 4 is a view of a third embodiment of an arrangement for a de-icer according to the invention, and
fig. 5 is a view of a forth embodiment of an arrangement for a de-icer according to the invention.

Fig. 1 is a view of a prior art arrangement 1 for a de-icer 2. As already mentioned above the arrangement 1 comprises a combined control unit and energy supply unit 4. The arrangement 1 also comprises inductor assemblies 6, which are individually connected to the combined control unit and energy supply unit 4. Since the inductor assemblies 6 operate with high electrical current the cables connecting the inductor assemblies 6 to the combined control unit and energy supply unit 4 have to be heavy and coarse. This result in a large total weigh of the arrangement 1 and in difficulties when installing the arrangement 1 in a structure, as for example a wing in an aircraft.

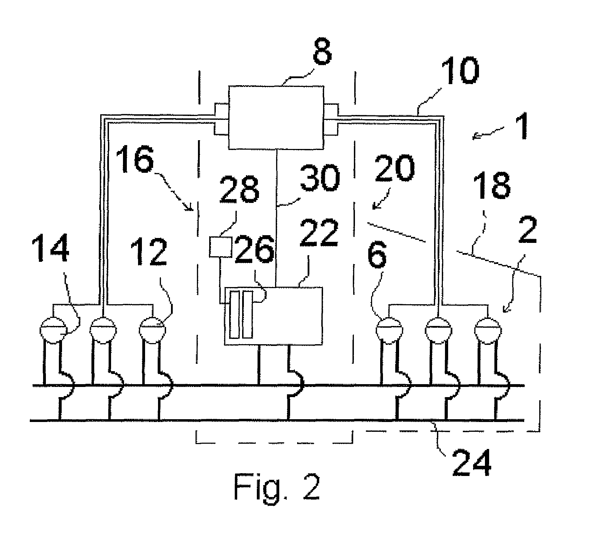

Fig. 2 discloses a first embodiment of an arrangement 1 for a de-icer 2 according to the invention. The arrangement 1 according to this embodiment comprises two sets of de-icers 2 with three de-icers 2 in each set. Each de-icer 2 comprises an inductor assembly 6, which is know to the skilled person in the art and is therefore not described in detail. Each inductor assembly 6 is connected to a control unit 8 via first control signal cables 10. When an inductor 6 should be activated a control signal from the control unit 8 activates a switch 12 in the inductor 6, so that electrical power to a coil 14 in the inductor 6 is supplied. The inductor 6 operates with high electrical current and voltage, and when the current flows through the coil 14 heavy vibrations are created by a magnetic field in the inductor 6. When installing the arrangement 1 in a structure 16, as for example a wing 18 in an aircraft 20 a large number of inductors 6 are mounted in the wings 18 of the aircraft 20. Also other components in the aircraft 20 may be de-iced, such as rudders and stabilisators and therefore inductors 6 are often mounted also into these components.

The inductors 6 are connected to an energy supply unit 22 via energy supply cables 24. According to the embodiment disclosed in fig. 2 each inductor 6 is connected to two energy supply cables 24, which in turn are connected to the energy supply unit 22. The energy supply unit 22 can include one or more capacitor units 26, which are charged by a generator 28.

The inductors 6 operate with high electric current in order to achieve a reliable de-icing effect. Therefore, the energy supply cables 24 are dimensioned to be able to transfer such high currents. As a result the cross-sectional area of the energy supply cables 24 and therefore also the diameter of the energy supply cables 24 has to be large. For this reason, especially when the arrangement 1 according to the invention is mounted into an aircraft 20, it is of interest to minimize the length of the energy supply cables 24 in order to reduce the total weight of the aircraft 20, so that the fuel consumption can be reduced.

Preferably, the control unit 8 and the energy supply unit 22 are two separate units and according to the first embodiment a second control signal cable 30 connects the control unit 8 and the energy supply unit 22. When an inductor 6 should be activated a control signal from the control unit 8 activates the inductor 6 as described above. Simoultanesly the control unit 8 sends a control signal to the energy supply unit 22 via the second control signal cable 30 with instructions to transmit power to the inductor 6.

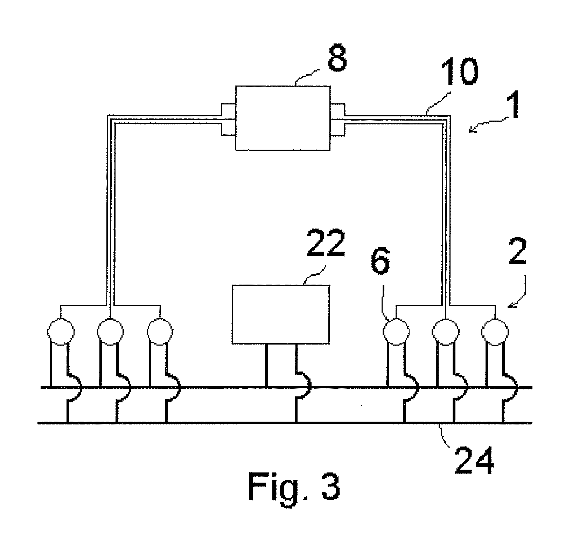

According to a second embodiment disclosed in fig. 3 the second control signal cable 30 is eliminated and power from the energy supply unit 22 is constantly fed to the inductors 6. However, current from the energy supply unit 22 is only passed through to the coil 14 in the inductor 6 when the switch 12 in the inductor 6 is activated by the control unit 8 via the first control signal cable 10.

When separating the energy supply unit 22 from the control unit 8 it will be simple to install the arrangement 1 in a structure 16, such as an aircraft 20, since it is possible to locate the energy supply unit 22 so that the length of the energy supply cables 24 will be as short as possible. If the inductor assemblies 6 are intended to be installed in the wings 18 of an aircraft 20, the energy supply unit 22 is preferably installed in the area of the wings 18.

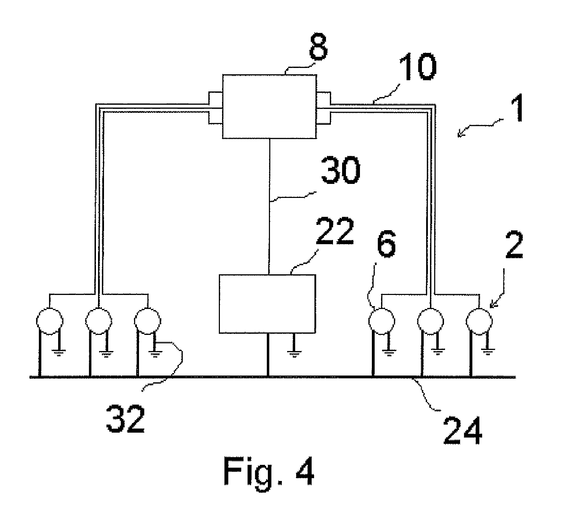

In fig. 4 is a third embodiment of an arrangement 1 for a de-icer 2 according to the invention disclosed. According to this embodiment the energy supply unit 22 and the inductors 6 are provided with connectors 32 for connection to a structure 16 of electrical conductive material. Such a structure 16 of electrical conductive material can be the body and the wings 18 of an aircraft 20, provided that such parts of the aircraft 20 are made of an electrical conductive material. In this embodiment only one single energy supply cable 24 is connected to the inductor assemblies 6 and as a result the total length of the energy supply cable 24 is reduced to a minimum. The current from the energy supply unit 22 is according to this embodiment is lead to the inductors 6 via the conductive structure 16 and the energy supply cable 24.

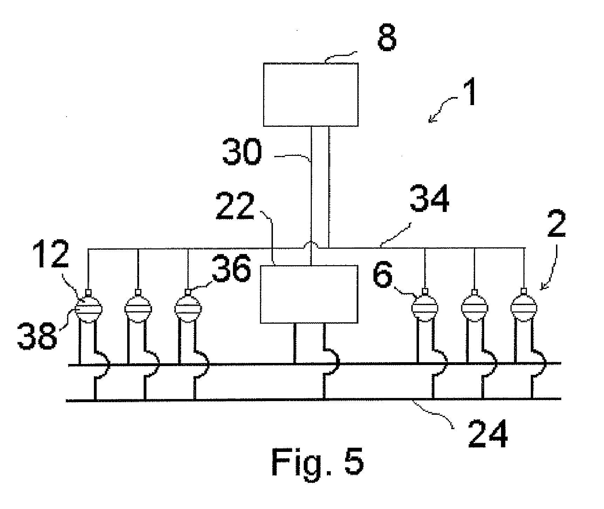

In fig. 5 a fourth embodiment of an arrangement 1 for a de-icer 2 according to the invention is disclosed. According to this embodiment each inductor 6 is connected to the control unit 8 via a data bus 34. To achieve the connection between the inductor 6 and the data bus 34 the inductor 6 is provided with a data bus interface 36. The interface 36 transmits signals from the control unit 8 in order to control a switch 12 in the inductor 6 to activate and de-activate the inductor 6. When the inductor 6 is activated electrical power from the energy supply unit 22 flows through a coil 14 in the inductor 6, which causes vibrations as mentioned above. The data bus interface 36 allows any computer already present in the aircraft provided with a suitable interface to control the inductors 6. Software to manage and control the inductors 6, and also the energy supply unit 22, via the data bus 34 can be added to the computer with no cost in terms of weight and no additional maintenance resources that would normally be associated with a dedicated control unit 8

This means that each inductor 6 can be individually controlled by the control unit 8 via the data bus 34 and the interface 36 in each inductor 6. Also, it is possible to provide the interface 36 with monitor logistics 38, so that the status of the inductor 6 can be monitored. Therefore, it is possible to report its status of the inductor 6 to the control unit 8 via the data bus 34. If, for example, a malfunction in one of the inductors 6 occurs, it is simple to recognise this inductor 6. Hence, a more reliable arrangement 1 is achieved.

The data bus 34 is simple to install and it has a light weight. If installed in an aircraft 20 the total weight of the aircraft 20 is reduced and as a result the fuel consumption is reduced.

According to the fourth embodiment disclosed in fig. 5 the control unit 8 is connected to the energy supply unit 22 via the second control signal cable 30. However, it may be possible to eliminate the second control signal cable 30 and constantly feed the inductors 6 with power from the energy supply unit 22. Also, it is possible to connect the energy supply unit 22 to the data bus 34, so that the control unit 8 can control the energy supply unit 22 via the databus 34.

Features of the embodiments disclosed above may be combined with each others. As an example it is possible to provide each of the arrangement 1 in the above embodiments with a data bus 34 to connect the control unit 8 to the inductors 6.

It is also possible to provide the arrangement 1 with sensors (not disclosed), which indicate if the inductors 6 have to be activated. Only one control unit 8 and energy supply unit 22 is disclosed above. However, it is possible to arrange several control units 8 and energy supply units 22 in the arrangement 1 according to the invention.

In the embodiments above six inductors are disclosed in the figures. However, any number of inductors 6 may be connected to the control unit 8 and the energy supply unit 22.

The arrangement 1 disclosed above may be installed in aircrafts, but also in other constructions, such as rotor blades for wind power plants.

## Claims

1. An arrangement for a de-icer, comprising
an inductor assembly (6),
a control unit (8) for controlling the inductor assembly (6),
an energy supply unit (22) for providing the inductor assembly (6) with electrical power,
cables (10, 24, 34) connecting the inductor assembly (6) to the control unit (8) and the energy supply unit (22),
**characterized in**
**that** one single energy supply cable (24) connects at least two inductor assemblies (6) to the energy supply unit (22).

2. An arrangement according to claim 1, **characterized in that** a first control signal cable (10) connects to each inductor assembly (6) to the control unit (8).

3. An arrangement according to claim 1, **characterized in that** a data bus (34) connects each inductor assembly (6) to the control unit (8).

4. An arrangement according to claim 3, **characterized in that** the inductor assemblies (6) are provided with a data bus interface (36).

5. An arrangement according to claim 4, **characterized in that** the interface (36) is provided with monitor logistics (38).

6. An arrangement according to any of the preceding claims, **characterized in that** the control unit (8) and the energy supply unit (22) are two separate units.

7. An arrangement according to claim 6, **characterized in that** a second control signal cable (30) connects the energy supply to the control unit (8).

8. An arrangement according to any of the preceding claims, **characterized in that** two energy supply cables (24) are connected to each inductor assembly (6).

9. An arrangement according to any of claims 1 - 7, **characterized in that** the energy supply unit (22) and the inductor assemblies (6) are provided with connectors (32) for connection to a structure (16) of electrical conductive material.
